(19) **Europäisches Patentamt**
**European Patent Office**
**Office européen des brevets**

(11) **EP 4 576 893 A1**

(12) **EUROPEAN PATENT APPLICATION**

(43) Date of publication:
**25.06.2025 Bulletin 2025/26**

(21) Application number: **24217823.4**

(22) Date of filing: **05.12.2024**

(51) International Patent Classification (IPC):
*H04W 64/00* (2009.01)    *H04W 4/70* (2018.01)
*H04W 76/14* (2018.01)

(52) Cooperative Patent Classification (CPC):
**H04W 64/00; H04W 4/70; H04W 76/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.12.2023 GB 202319555**

(71) Applicant: **Nokia Technologies Oy 02610 Espoo (FI)**

(72) Inventors:
• **KIILERICH PRATAS, Nuno Manuel Aalborg (DK)**

• **BARBU, Oana-Elena Aalborg (DK)**
• **VEJLGAARD, Benny Gistrup (DK)**
• **HARREBEK, Johannes Aalborg (DK)**
• **SVENDSEN, Simon Aalborg (DK)**

(74) Representative: **Nokia EPO representatives Nokia Technologies Oy Karakaari 7 02610 Espoo (FI)**

(54) **APPARATUS, METHOD AND COMPUTER PROGRAM**

(57)    There is provided a reader device comprising means for receiving, from an access node, first information, wherein the first information is for receiving an ambient internet of things, IoT, response from an ambient IoT device, wherein the ambient IoT device is activated by a transmission from an activator device, means for, based on receiving the first information, transmitting positioning reference signals, means for receiving second information from at least one further user equipment, the second information relating to the positioning reference signals, and receiving a positioning reference signal from the at least one further user equipment, means for determining a delay associated with each of the least one further user equipment based on the received second information and the received positioning reference signal, means for determining at least one activator device from the at least one further user equipment based on the determined delay and means for configuring an activation session at the determined at least one activator device based on the first information.

Figure 4

**Description**

*Field*

The present application relates to a method, apparatus, system and computer program and in particular but not exclusively to handling activators and readers under different serving cells for ambient Internet of Things (A-IoT) devices.

*Background*

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is Universal Mobile Telecommunications System (UMTS) Terrestrial Radio Access Network (UTRAN) (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). Other examples of communication systems include 5G-Advanced (NR Rel-18 and beyond) and 6G.

*Summary*

In a first aspect there is provided a first device comprising means for receiving from a first access node, information associated with receiving a response from a further device, wherein the information comprises at least one of the following: scheduling information for receiving the response, a gap configuration for receiving the response, or scheduling information for reporting the response, means for receiving the response based on the received information and means for, based on the received information and in response to receiving the response, providing a report relating to the response to the first access node or a second device.

The further device may be activated by a transmission from the second device. The second device may be associated with a second access node. The first access node and the second access node may be different.

The first device may comprise means for providing a request to the first access node for the gap configuration for receiving the response.

The first device may comprise means for performing a discovery procedure for the second device.

The first device may be a reader device. The second device may be an activator device.

The further device may be an ambient Internet of Things, AIoT, device. The response may be an AIoT response.

In a second aspect there is provided an access node comprising means for providing from the access node to a first device, information associated with receiving a response at the first device from a further device, wherein the information comprises at least one of the following: scheduling information for receiving the response, a gap configuration for receiving the response, or scheduling information for reporting the response and means for receiving, based on the provided information, a report at the first access node relating to the response received at the first device.

The further device may be activated by a transmission from a second device. The second device may be associated with a second access node. The first access node and the second access node may be different.

The access node may comprise means for receiving a trigger from a network function to provide the information to the first device and means for providing the information based on the trigger.

The access node may comprise means for receiving a request at the access node from the first device for the gap configuration for receiving the response.

In a third aspect there is provided a second device comprising means for receiving from a second access node information associated with providing an activation signal to a further device, wherein the information comprises at least one of the following: scheduling information for providing the activation signal, or a gap configuration for providing the activation signal and means for providing the activation signal based on the received information.

A response from the further device may be received by a first device. The first device may be associated with a first access node. The first access node and the second access node may be different.

The second device may comprise means for providing a request to the second access node for a gap configuration for providing the activation signal.

In a fourth aspect there is provided an access node comprising means for providing from the access node to a second device information associated with providing an activation signal to a further device, wherein the information comprises at least one of the following: scheduling information for providing the activation signal, or a gap configuration for providing the activation signal.

The access node may comprise means for receiving a trigger from a network function to provide the information to the second device and means for providing the information based on the trigger.

In a fifth aspect there is provided an apparatus comprising a network function comprising means for providing a trigger from the network function to at least one of: a first access node to provide to a first device information associated with receiving a response from a further device, or a second access node to provide a second device with information associated with providing an activation signal to the further device, wherein the information comprises at least one of the following: scheduling information for receiving the response, a gap configuration for receiving the response, scheduling information for reporting the response, scheduling information for providing the activation signal, or a gap configuration for providing the activation signal, and wherein the first access node and the second access node are different.

The apparatus may further comprise means for receiving, based on the provided information, a report at the network function from the first device relating to a response received at the first device.

The report may be received at the network function via the second access node.

In a sixth aspect there is provided a method comprising receiving from a first access node, information associated with receiving a response from a further device, wherein the information comprises at least one of the following: scheduling information for receiving the response, a gap configuration for receiving the response, or scheduling information for reporting the response, receiving the response based on the received information and, based on the received information and in response to receiving the response, providing a report relating to the response to the first access node or a second device.

The further device may be activated by a transmission from the second device. The second device may be associated with a second access node. The first access node and the second access node may be different.

The method may comprise providing a request to the first access node for the gap configuration for receiving the response.

The method may comprise performing a discovery procedure for the second device.

The first device may be a reader device. The second device may be an activator device.

The further device may be an ambient Internet of Things, AIoT, device. The response may be an AIoT response.

In a seventh aspect there is provided a method comprising providing from the access node to a first device, information associated with receiving a response at the first device from a further device, wherein the information comprises at least one of the following: scheduling information for receiving the response, a gap configuration for receiving the response, or scheduling information for reporting the response and receiving, based on the provided information, a report at the first access node relating to the response received at the first device.

The further device may be activated by a transmission from a second device. The second device may be associated with a second access node. The first access node and the second access node may be different.

The method may comprise receiving a trigger from a network function to provide the information to the first device and means for providing the information based on the trigger.

The method may comprise receiving a request at the access node from the first device for the gap configuration for receiving the response.

In an eighth aspect there is provided a method comprising receiving from a second access node information associated with providing an activation signal to a further device, wherein the information comprises at least one of the following: scheduling information for providing the activation signal, or a gap configuration for providing the activation signal and providing the activation signal based on the received information.

A response from the further device may be received by a first device. The first device may be associated with a first access node. The first access node and the second access node may be different.

The method may comprise providing a request to the second access node for a gap configuration for providing the activation signal.

In a ninth aspect there is provided a method comprising providing from the access node to a second device information associated with providing an activation signal to a further device, wherein the information comprises at least one of the following: scheduling information for providing the activation signal, or a gap configuration for providing the activation signal.

The method may comprise receiving a trigger from a network function to provide the information to the second device and means for providing the information based on the trigger.

In a tenth aspect there is provided a method comprising, at a network function, providing a trigger from the network function to at least one of: a first access node to provide to a first device information associated with receiving a response from a further device, or a second access node to provide a second device with information associated with providing an activation signal to the further device, wherein the information comprises at least one of the following: scheduling information for receiving the response, a gap configuration for receiving the response, scheduling information for reporting the response, scheduling information for providing the activation signal, or a gap configuration for providing the activation signal, and wherein the first access node and the second access node are different.

The method may further comprise receiving, based on the provided information, a report at the network function from the first device relating to a response received at the first device.

The report may be received at the network function via the second access node.

In an eleventh aspect there is provided a first device comprising at least one processor, and at least one memory storing instructions which, when executed by the processor, cause the first device at least to: receive from a first access node, information associated with receiving a response from a further device, wherein the information comprises at least one of the following: scheduling information for receiving the response, a gap configuration for receiving the response, or scheduling information for reporting the response, receive the response based on the received information and based on the received information and in response to receiving the response, provide a report relating to the response to the first access node or a second device.

The further device may be activated by a transmission from the second device. The second device may be associated with a second access node. The first access node and the second access node may be different.

The first device may be caused to provide a request to the first access node for the gap configuration for receiving the response.

The first device may be caused to perform a discovery procedure for the second device.

The first device may be a reader device. The second device may be an activator device.

The further device may be an ambient Internet of Things, AIoT, device. The response may be an AIoT response.

In a twelfth aspect there is provided an access node comprising at least one processor, and at least one memory storing instructions which, when executed by the processor, cause the access node at least to: provide from the access node to a first device, information associated with receiving a response at the first device from a further device, wherein the information comprises at least one of the following: scheduling information for receiving the response, a gap configuration for receiving the response, or scheduling information for reporting the response and receive, based on the provided information, a report at the first access node relating to the response received at the first device.

The further device may be activated by a transmission from a second device. The second device may be associated with a second access node. The first access node and the second access node may be different.

The access node may comprise means for receiving a trigger from a network function to provide the information to the first device and means for providing the information based on the trigger.

The access node may be caused to receive a request at the access node from the first device for the gap configuration for receiving the response.

In a thirteenth aspect there is provided a second device comprising at least one processor, and at least one memory storing instructions which, when executed by the processor, cause the second device at least to: receive from a second access node information associated with providing an activation signal to a further device, wherein the information comprises at least one of the following: scheduling information for providing the activation signal, or a gap configuration for providing the activation signal and provide the activation signal based on the received information.

A response from the further device may be received by a first device. The first device may be associated with a first access node. The first access node and the second access node may be different.

The second device may be caused to provide a request to the second access node for a gap configuration for providing the activation signal.

In a fourteenth aspect there is provided an access node comprising at least one processor, and at least one memory storing instructions which, when executed by the processor, cause the access node at least to: provide from the access node to a second device information associated with providing an activation signal to a further device, wherein the information comprises at least one of the following: scheduling information for providing the activation signal, or a gap configuration for providing the activation signal.

The access node may be caused to receive a trigger from a network function to provide the information to the second device and provide the information based on the trigger.

In a fifteenth aspect there is provided an apparatus comprising a network function comprising at least one processor, and at least one memory storing instructions which, when executed by the processor, cause the apparatus at least to: provide a trigger from the network function to at least one of: a first access node to provide to a first device information associated with receiving a response from a further device, or a second access node to provide a second device with information associated with providing an activation signal to the further device, wherein the information comprises at least one of the following: scheduling information for receiving the response, a gap configuration for receiving the response, scheduling information for reporting the response, scheduling information for providing the activation signal, or a gap configuration for providing the activation signal, and wherein the first access node and the second access node are different.

The apparatus may further comprise means for receiving, based on the provided information, a report at the network function from the first device relating to a response received at the first device.

The report may be received at the network function via the second access node.

In a sixteenth aspect there is provided a computer readable medium comprising instructions which, when executed by a first device, cause the first device to perform at least the following: receiving from a first access node, information associated with receiving a response from a further device, wherein the information comprises at least one of the following: scheduling information for receiving the response, a gap configuration for receiving the response, or scheduling information for reporting the response, receiving the response based on the received information and, based on the received information and in response to receiving the response, providing a report relating to the response to the first access node or a second device.

The further device may be activated by a transmission from the second device. The second device may be associated with a second access node. The first access node and the second access node may be different.

The first device may be caused to perform providing a request to the first access node for the gap configuration for receiving the response.

The first device may be caused to perform performing a discovery procedure for the second device.

The first device may be a reader device. The second device may be an activator device.

The further device may be an ambient Internet of Things, AIoT, device. The response may be an AIoT response.

In a seventeenth aspect there is provided a computer readable medium comprising instructions which, when executed by an access node, cause the access node to perform at least the following: providing from the access node to a first device, information associated with receiving a response at the first device from a further device, wherein the information comprises at least one of the following: scheduling information for receiving the response, a gap configuration for receiving the response, or scheduling information for reporting the response and receiving, based on the provided information, a report at the first access node relating to the response received at the first device.

The further device may be activated by a transmission from a second device. The second device may be associated with a second access node. The first access node and the second access node may be different.

The access node may be caused to perform receiving a trigger from a network function to provide the information to the first device and means for providing the information based on the trigger.

The access node may comprise means for receiving a request at the access node from the first device for the gap configuration for receiving the response.

In an eighteenth aspect there is provided a computer readable medium comprising instructions which, when executed by a second device, cause the second device to perform at least the following: receiving from a second access node information associated with providing an activation signal to a further device, wherein the information comprises at least one of the following: scheduling information for providing the activation signal, or a gap configuration for providing the activation signal and providing the activation signal based on the received information.

A response from the further device may be received by a first device. The first device may be associated with a first access node. The first access node and the second access node may be different.

The second device may be caused to perform providing a request to the second access node for a gap configuration for providing the activation signal.

In a nineteenth aspect there is provided a computer readable medium comprising instructions which, when executed by an access node, cause the apparatus to perform at least the following: providing from the access node to a second device information associated with providing an activation signal to a further device, wherein the information comprises at least one of the following: scheduling information for providing the activation signal, or a gap configuration for providing the activation signal.

The access node may be caused to perform receiving a trigger from a network function to provide the information to the second device and means for providing the information based on the trigger.

In a twentieth aspect there is provided a computer readable medium comprising instructions which, when executed by an apparatus, cause the apparatus to perform at least the following: providing a trigger from the network function to at least one of: a first access node to provide to a first device information associated with receiving a response from a further device, or a second access node to provide a second device with information associated with providing an activation signal to the further device, wherein the information comprises at least one of the following: scheduling information for receiving the response, a gap configuration for receiving the response, scheduling information for reporting the response, scheduling information for providing the activation signal, or a gap configuration for providing the activation signal, and wherein the first access node and the second access node are different.

The apparatus may further comprise means for receiving, based on the provided information, a report at the network function from the first device relating to a response received at the first device.

In a twenty first aspect there is provided a reader device comprising means for receiving, from an access node, first information, wherein the first information is for receiving an ambient internet of things, IoT, response from an ambient IoT device, wherein the ambient IoT device is activated by a transmission from an activator device, means for, based on receiving the first information, transmitting positioning reference signals, means for receiving second information from at least one further user equipment, the second information relating to the positioning reference signals, and receiving a positioning reference signal from the at least one further user equipment, means for determining a delay associated with each of the least one further user equipment based on the received second information and the received positioning reference signal, means for determining at least one activator device from the at least one further user equipment based on the determined delay and means for configuring an activation session at the determined at least one activator device based on the first information.

Means for determining the activator device may comprise means for sorting the at least one further user equipment based on at least one delay threshold.

Each of the at least one delay threshold may be associated with a type of ambient IoT device.

The reader device may comprise means for determining the activator device based on the type of the ambient IoT device.

The first information may comprise scheduling information.

The positioning reference signals may comprise sidelink positioning reference signals.

In a twenty second aspect there is provided an activator device comprising means for receiving, from an access node, first information, wherein the first information is for providing an ambient internet of things, IoT, transmission to an ambient IoT device, wherein the ambient IoT device response is received by a reader device, means for, based on receiving the first information, transmitting positioning reference signals, means for receiving second information from at least one further user equipment, the second information relating to the positioning reference signals, and receiving a positioning reference signal from the at least one further user equipment, means for determining a delay associated with each of the least one further user equipment based on the received second information and the received positioning reference signal, means for determining at least one reader device from the at least one further user equipment based on the determined delay and means for configuring a reading session at the determined at least one reader device based on the first information.

Means for determining the reader device may comprise means for sorting the at least one further user equipment based on at least one delay threshold.

Each of the at least one delay threshold may be associated with a type of ambient IoT device.

The activator device may comprise means for determining the reader device based on the type of the ambient IoT device.

The first information may comprise scheduling information.

The positioning reference signals may comprise sidelink positioning reference signals.

In a twenty third aspect there is provided a method comprising receiving, from an access node, first information, wherein the first information is for receiving an ambient internet of things, IoT, response from an ambient IoT device, wherein the ambient IoT device is activated by a transmission from an activator device, based on receiving the first information, transmitting positioning reference signals, receiving second information from at least one further user equipment, the second information relating to the positioning reference signals, and receiving a positioning reference signal from the at least one further user equipment, determining a delay associated with each of the least one further user equipment based on the received second information and the received positioning reference signal, determining at least one activator device from the at least one further user equipment based on the determined delay and configuring an activation session at the determined at least one activator device based on the first information.

Determining the activator device may comprise sorting the at least one further user equipment based on at least one delay threshold.

Each of the at least one delay threshold may be associated with a type of ambient IoT device.

The reader device may comprise means for determining the activator device based on the type of the ambient IoT device.

The first information may comprise scheduling information.

The positioning reference signals may comprise sidelink positioning reference signals.

In a twenty fourth aspect there is provided a method comprising receiving, from an access node, first information, wherein the first information is for providing an ambient internet of things, IoT, transmission to an ambient IoT device, wherein the ambient IoT device response is received by a reader device, based on receiving the first information, transmitting positioning reference signals, receiving second information from at least one further user equipment, the second information relating to the positioning reference signals, and receiving a positioning reference signal from the at least one further user equipment, determining a delay associated with each of the least one further user equipment based on the received second information and the received positioning reference signal, determining at least one reader device from the at least one further user equipment based on the determined delay and configuring a reading session at the determined at least one reader device based on the first information.

Determining the reader device comprises sorting the at least one further user equipment based on at least one delay threshold.

Each of the at least one delay threshold may be associated with a type of ambient IoT device.

The activator device may comprise means for determining the reader device based on the type of the ambient IoT device.

The first information may comprise scheduling information.

The positioning reference signals may comprise sidelink positioning reference signals.

In a twenty fifth aspect there is provided a reader device comprising at least one processor, and at least one memory storing instructions which, when executed by the processor, cause the reader device at least to receive, from an access node, first information, wherein the first information is for receiving an ambient internet of things, IoT, response from an ambient IoT device, wherein the ambient IoT device is activated by a transmission from an activator device, based on receiving the first information, transmit positioning reference signals, receive second information from at least one further user equipment, the second information relating to the positioning reference signals, and receive a positioning reference signal from the at least one further user equipment, determine a delay associated with each of the least one further user equipment based on the received second information and the received positioning reference signal, determine at least one activator device from the at least one further user equipment based on the determined delay and configure an activation session at the determined at least one activator device based on the first information.

The device may be caused to sort the at least one further user equipment based on at least one delay threshold.

Each of the at least one delay threshold may be associated with a type of ambient IoT device.

The reader device may comprise means for determining the activator device based on the type of the ambient IoT device.

The first information may comprise scheduling information.

The positioning reference signals may comprise sidelink positioning reference signals.

In a twenty sixth aspect there is provided an activator device comprising at least one processor, and at least one memory storing instructions which, when executed by the processor, cause the activator device at least to: receive, from an access node, first information, wherein the first information is for providing an ambient internet of things, IoT, transmission to an ambient IoT device, wherein the ambient IoT device response is received by a reader device, based on receiving the first information, transmit positioning reference signals, receive second information from at least one further user equipment, the second information relating to the positioning reference signals, and receive a positioning reference signal from the at least one further user equipment, determine a delay associated with each of the least one further user equipment based on the received second information and the received positioning reference signal, determine at least one reader device from the at least one further user equipment based on the determined delay and configure a reading session at the determined at least one reader device based on the first information.

The device may be caused to sort the at least one further user equipment based on at least one delay threshold.

Each of the at least one delay threshold may be associated with a type of ambient IoT device.

The activator device may comprise means for determining the reader device based on the type of the ambient IoT device.

The first information may comprise scheduling information.

The positioning reference signals may comprise sidelink positioning reference signals.

In a twenty seventh aspect there is provided a computer readable medium comprising instructions which, when executed by a reader device, cause the reader device to perform at least the following: receiving, from an access node, first information, wherein the first information is for receiving an ambient internet of things, IoT, response from an ambient IoT device, wherein the ambient IoT device is activated by a transmission from an activator device, based on receiving the first information, transmitting positioning reference signals, receiving second information from at least one further user equipment, the second information relating to the positioning reference signals, and receiving a positioning reference signal from the at least one further user equipment, determining a delay associated with each of the least one further user equipment based on the received second information and the received positioning reference signal, determining at least one activator device from the at least one further user equipment based on the determined delay and configuring an activation session at the determined at least one activator device based on the first information.

Determining the activator device may comprise sorting the at least one further user equipment based on at least one delay threshold.

Each of the at least one delay threshold may be associated with a type of ambient IoT device.

The reader device may comprise means for determining the activator device based on the type of the ambient IoT device.

The first information may comprise scheduling information.

The positioning reference signals may comprise sidelink positioning reference signals.

In a twenty eighth aspect there is provided a computer readable medium comprising instructions which, when executed by an activator device, cause the activator device to perform at least the following: receiving, from an access node, first information, wherein the first information is for providing an ambient internet of things, IoT, transmission to an ambient IoT device, wherein the ambient IoT device response is received by a reader device, based on receiving the first information, transmitting positioning reference signals, receiving second information from at least one further user equipment, the second information relating to the positioning reference signals, and receiving a positioning reference signal from the at least one further user equipment, determining a delay associated with each of the least one further user equipment based on the received second information and the received positioning reference signal, determining at least one reader device from the at least one further user equipment based on the determined delay and configuring a reading session at the determined at least one reader device based on the first information.

Determining the reader device may comprise sorting the at least one further user equipment based on at least one delay threshold.

Each of the at least one delay threshold may be associated with a type of ambient IoT device.

The activator device may comprise means for determining the reader device based on the type of the ambient IoT device.

The first information may comprise scheduling information.

The positioning reference signals may comprise sidelink positioning reference signals.

In an aspect there is provided a non-transitory computer readable medium comprising program instructions for causing an apparatus to perform at least the method according to any of the aspects above.

In the above, many different embodiments have been described. It should be appreciated that further embodiments may be provided by the combination of any two or more of the embodiments described above.

*Description of Figures*

Embodiments will now be described, by way of example only, with reference to the accompanying Figures in which:

Figure 1 shows a schematic diagram of an example 5GS communication system;

Figure 2 shows a schematic diagram of an example mobile communication device;

Figure 3 shows a schematic diagram of an example control apparatus;

Figure 4 shows an example ambient IoT architecture where the reader device and activator device are in different cells;

Figure 5 shows a flowchart of a method according to an example embodiment;

Figure 6 shows a flowchart of a method according to an example embodiment;

Figure 7 shows a flowchart of a method according to an example embodiment;

Figure 8 shows a flowchart of a method according to an example embodiment;

Figure 9 shows a flowchart of a method according to an example embodiment;

Figure 10 shows a signalling diagram for an example solution;

Figure 11 shows a signalling diagram for an example solution;

Figure 12 shows a signalling diagram for an example solution;

Figure 13 shows a signalling diagram for an example solution;

Figure 14 shows a signalling diagram for an example solution;

Figure 15 shows a flowchart of a method according to an example embodiment;

Figure 16 shows a flowchart of a method according to an example embodiment.

*Detailed description*

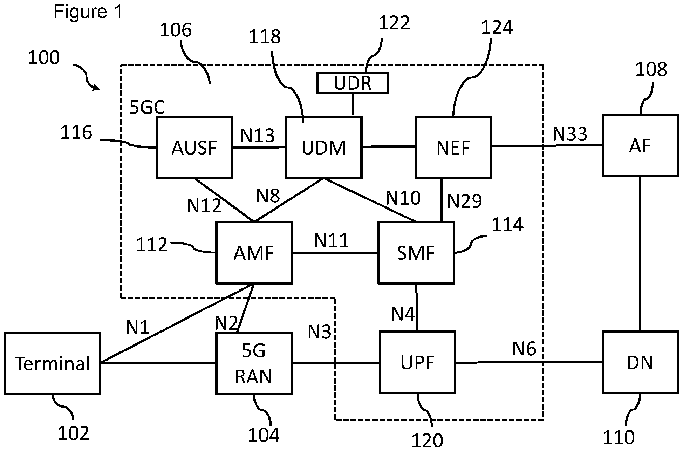

Before explaining in detail the examples, certain general principles of a wireless communication system and mobile communication devices are briefly explained with reference to Figure 1, Figure 2 and Figure 3 to assist in understanding the technology underlying the described examples.

An example of a suitable communications system is the 5G or NR concept. Network architecture in NR may be similar to that of LTE-advanced. Base stations of NR systems may be known as next generation NodeBs (gNBs). Changes to the network architecture may depend on the need to support various radio technologies and finer Quality of Service (QoS) support, and some on-demand requirements for e.g. QoS levels to support Quality of Experience (QoE) for a user. Also network aware services and applications, and service and application aware networks may bring changes to the architecture. Those are related to Information Centric Network (ICN) and User-Centric Content Delivery Network (UC-CDN) approaches. NR may use Multiple Input - Multiple Output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

Figure 1 shows a schematic representation of a 5G system (5GS) 100. The 5GS may comprise a user equipment (UE) 102 (which may also be referred to as a communication device or a terminal), a 5G radio access network (5GRAN) 104, a 5G core network (5GCN) 106, one or more internal or external application functions (AF) 108 and one or more data networks (DN) 110.

An example 5G core network (CN) comprises functional entities. The 5GCN 106 may comprise one or more Access and mobility Management Functions (AMF) 112, one or more session management functions (SMF) 114, an authentication server function (AUSF) 116, a Unified Data Management (UDM) 118, one or more user plane functions (UPF) 120, a Unified Data Repository (UDR) 122 and/or a Network Exposure Function (NEF) 124. The UPF is controlled by the SMF (Session Management Function) that receives policies from a PCF (Policy Control Function).

The CN is connected to a UE via the Radio Access Network (RAN). The 5GRAN may comprise one or more gNodeB (gNB) Distributed Unit (DU) functions connected to one or more gNodeB (gNB) Centralized Unit (CU) functions. The RAN may comprise one or more access nodes.

A User Plane Function (UPF) referred to as PDU Session Anchor (PSA) may be responsible for forwarding frames back and forth between the DN and the tunnels established over the 5G towards the UE(s) exchanging traffic with the DN.

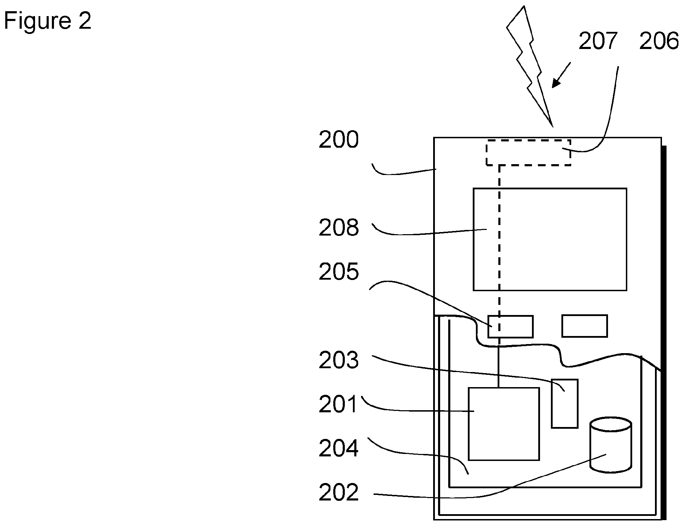

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, voice over IP (VoIP) phones, portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), smart devices, wireless customer-premises equipment (CPE), or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts, and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant components can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

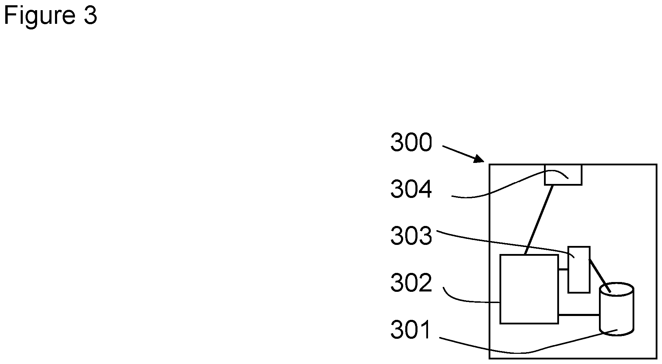

Figure 3 shows an example of a control apparatus 300 for a communication system, for example to be coupled to and/or for controlling a station of an access system, such as a RAN node, e.g. a base station, eNB or gNB, a relay node or a core network node such as an MME or Serving Gateway (S-GW) or Packet Data Network Gateway (P-GW), or a core network function such as AMF/SMF, or a server or host. The method may be implemented in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller.

The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

The number of Internet of Things (IoT) connections has been growing rapidly in recent years and is predicted to be hundreds of billions by 2030. With more and more 'things' expected to be interconnected for improving production efficiency and increasing comforts of life, there is a demand for further reduction of size, cost, and power consumption for IoT devices. For example, regular replacement of battery for all the IoT devices is impractical due to the consumption of materials and manpower. It has become a trend to use energy harvested from environments to power IoT devices for self-sustainable communications, especially in applications with a huge number of devices (e.g., ID tags and sensors).

3GPP has specified NB-IoT/eMTC and NR RedCap before R18 to satisfy requirements on low cost and low power devices for wide area IoT communication. These IoT devices usually consume tens or hundreds of milliwatts power during transceiving, while the cost is a few dollars. However, to achieve the internet of everything, IoT devices with ten or even a hundred times lower cost and power consumption are sought, especially for a large number of applications requiring batteryless devices.

One issue with existing 3GPP technologies for the target use cases is the capability of cooperating with energy harvesting considering limited device size. Cellular devices usually consume tens or even hundreds of milliwatts power for transceiver processing. Taking NB-IoT module for example, the typical current consumption for receive processing is about 60mA with supply voltage higher than 3.1V, while 70mA for transmitting processing at 0dBm transmit power. The output power provided by typical energy harvester is mostly below 1 milliwatt, considering the small size of a few square centimeters for practical devices. Since the available power is far less than the consumed power, it is impractical to power cellular devices directly by energy harvesting in most cases.

One possible solution is to integrate energy harvesting with a rechargeable battery or supercapacitor. However, there are still a few problems to be solved. Firstly, both rechargeable battery and supercapacitor may suffer from shortened lifetime in practical cases. It is hard to provide constant charging current or voltage by energy harvesting, while longtime continuous charging is needed due to the small output power from an energy harvester. Inconstant charging current and longtime continuous charging are both harmful to battery life. For supercapacitor, its lifetime may be significantly reduced in high temperature environments (e.g., less than 3 years at 50 degrees centigrade). Secondly, device size will be significantly increased. As small size button battery can only provide current of a few tens of milliamps, a battery with much larger size (e.g., AA battery) is usually used to power cellular devices, whose size can be even larger than the module itself. To store energy for a proper duration of working (e.g., one second), the required capacitance of a supercapacitor is at the level of a hundred mill-farads. The size of such supercapacitors may be larger than an NB-IoT module. Thirdly, both rechargeable batteries and supercapacitors can be more expensive than the module itself. Even purchased in large quantities, the cost of a suitable battery or supercapacitor may reach one or a few dollars, which may double the cost of the device.

RFID is a well-known technology supporting battery less tags (also referred to as IoT devices). The power consumption of commercial passive RFID tags can be as low as 1 microwatt. The key techniques enabling such low power consumption are envelope detection for downlink data reception, and backscatter communication for uplink data transmission. RFID is designed for short-range communications, whose typical effective range is less than 10 meters. As the air interface of RFID is almost unchanged since 2005, the transmission scheme becomes an obstacle for improving link budget and its capability of supporting a scalable network.

Backscatter represents a battery-free technique that utilizes an incoming radio-frequency (RF) signal for data transmission. This method relies on passive reflection and modulation of the RF signal, converting it into a small amount of electricity, typically ranging from tens to hundreds of microwatts. This harvested energy is then harnessed to encode data and facilitate communication without the need for an external power source.

Attracted by the extremely low power consumption of backscatter communication, many non-3GPP technologies begin to put efforts into related research, such as Wi-Fi, Bluetooth, UWB, and LoRa. Various research shows that a few or tens of microwatts power consumption can be supported for passive tags based on or with small modifications to the above air interfaces. A significant proportion of the studies are targeting at long range communication. Among them, a LoRa tag implemented with commercial off-the-shelf components can send its sensing data to the receiver of 381 meters away.

Passive/Ambient Internet of Things (Ambient IoT) relates to IoT devices that operate without a dedicated power source. These devices, which may be battery-less or have limited energy storage, derive energy from various ambient sources such as radio waves, light, motion, heat, or other suitable power sources.

A passive radio is a device that utilizes the energy from incoming wireless signals, transmitted on specific carriers and/or bandwidths, to power its circuitry. Once triggered by the incoming energy, the passive radio activates and emits or reflects a signal. A typical passive radio architecture consists of an activator, a device that sends an activation signal; a passive radio, a device that harness energy and listens for activation signal, and a reader, a device that listens and detects passive radio signals.

Three distinct types of devices have been identified, Device A, Device B and Device C.

Device A is a passive device with no energy storage. Device B is a passive device with energy storage and Device C is an active device with energy storage.

The design target for power consumption is less than or equal to 10 $\mu$W for Device A, less than or equal to 1mW for Device C and between these values for Device B. The device complexity design target is comparable to UHF RFID for Device A, orders of magnitude lower than NB-IoT for Device C and between Device A and Device C for Device B.

The coexistence of AIoT and cellular communications may be achieved via fully Integrated AIoT and cellular communications, where their coexistence is enabled via network-controlled resource scheduling (i.e. activation and reading of the AIoT device is scheduled) and therefore the network is always aware of the impact of the AIoT communications into the "normal" cellular operations. One advantage of this approach is the (radio) network control over AIoT and therefore any issues related to coexistence (e.g. such as interference) can be mitigated. One disadvantage is that the AIoT devices need to implement at least the essential parts of the 3GPP communication stack in both user and control plane, which can be problematic at least for AIoT Devices Type A and B.

Alternatively, or in addition, coexistence of AIoT and cellular communications may be achieved via fully decoupled AIoT and cellular communications, where their coexistence is enabled via deployment of the AIoT in different carriers other than the cellular communications and then the only impact on the cellular devices (which take the role of activators or readers) is the need to configure measurement gaps in order to minimize the disruption of their "normal" cellular communications. One advantage of this approach is that AIoT devices (such as Type A and B) will no longer need to implement the full user and control plane stack.

Alternatively, or in addition, coexistence of AIoT and cellular communications may be achieved via partially decoupled AIoT and cellular communications, where the activation and reading can occur at different carriers than the "normal" cellular communications or the activator and readers can be under the control of different cells (or even operators). In this case, a combination of resource scheduling and measurement gaps can be deployed to enable the AIoT and cellular communications coexistence. One advantage of this approach is that the activators and reader no longer need to be under the same serving cell.

Measurement gaps (MG), also referred to herein as "gaps", refer to specific time intervals during which a UE is not engaged in transmitting or receiving data to or from its serving cell. These gaps are intentionally designed to allow the UE to focus on measuring signals from sources beyond its current active Bandwidth Part (BWP). These measurement gaps may be configured by gNB or requested by the UE. In both cases however, the gNB configures the MG for a given duration, with a given periodicity, for a given purpose. The MG length should be sufficiently long so that the UE switches to the new carrier(s), performs all required measurements (on one or more new carriers), and switches back to its original serving carrier.

Measurement gaps (MG) may be defined as time intervals in which a UE is exempt from UUDL TX/RX with its serving cell (e.g., an apparatus is not engaged in transmitting or receiving data with its serving cell), so that the UE can perform measurements of signals outside the UE's current active BWP. Measurement gaps may be configured by the gNB or requested by the UE. In both cases however, the gNB configures the MG for a given duration, with a given periodicity, for a given purpose.

3GPP standards may define different MG patterns, depending on whether the UE should perform intra-frequency cells and/or inter-frequency cells and/or inter-RAT E-UTRAN cells or PRS measurement and/or whether the UE supports independent measurement gap patterns for different frequency ranges.

In A-IoT systems, an activator and a reader may be configured to detect and manage potentially hundreds or even thousands of A-IoT devices. Some of these A-IoT devices may operate on different carrier frequencies or utilize various subsets of carriers for their communication (different from the activator/reader UE carriers but also different among themselves, depending on the device type).

When a UE is requested to support AIoT device detection/communication (i.e., activation/reading) on a carrier different from an active cell carrier a MG for activation (also referred to as an activation gap (AG)) or for reading is required. How to configure a MG for an activator UE and a reader UE may not be straightforward given the current specifications since the NR NW does not know which of the AIoT devices are in the proximity of which activator and/or readers and the current MG configuration does not provision for measurements of thousands of potentially concurrent signals.

If the selected activator UE and reader UE are being served by different cells, another problem may arise because, in this scenario, the activator UE and reader UE need to coordinate with their respective serving cells on how to cooperate with each other.

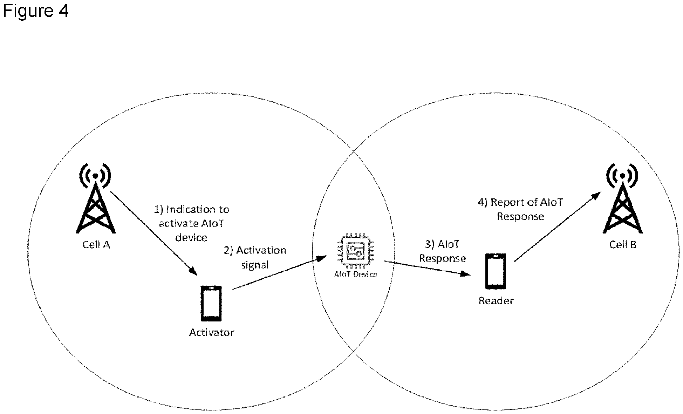

Figure 4 shows an example architecture where an activator device for an AIoT device has one serving cell (Cell A) and a reader device for the AIoT device has another serving cell (Cell B).

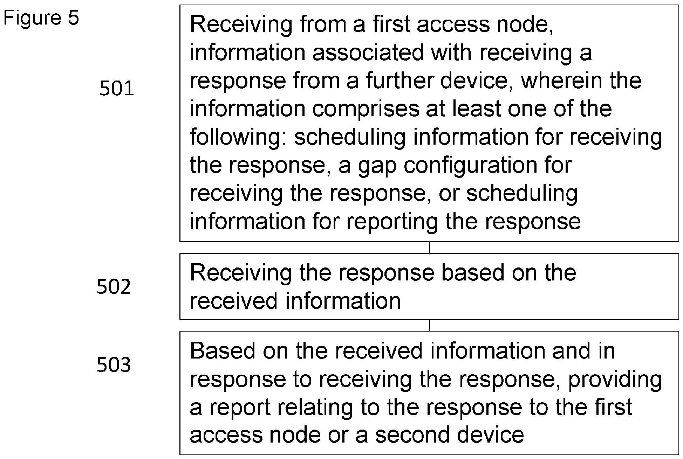

Figure 5 shows a flowchart of a method according to an example embodiment. The method may be performed at a first device.

In 501, the method comprises receiving from a first access node, information associated with receiving a response from a further device, wherein the information comprises at least one of the following: scheduling information for receiving the response, a gap configuration for receiving the response, or scheduling information for reporting the response.

In 502, the method comprises receiving the response based on the received information.

In 503 the method comprises, based on the received information and in response to receiving the response, providing a report relating to the response to the first access node or a second device.

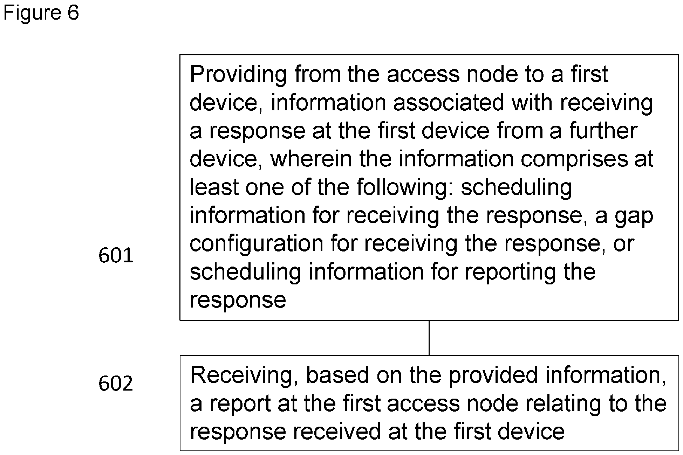

Figure 6 shows a flowchart of a method according to an example embodiment. The method may be performed at an access node. The access node may be the first access node referred to in the method described with reference to Figure 5.

In 601, the method comprises providing from the access node to a first device, information associated with receiving a response at the first device from a further device, wherein the information comprises at least one of the following: scheduling information for receiving the response, a gap configuration for receiving the response, or scheduling information for reporting the response.

In 602, the method comprises receiving, based on the provided information, a report at the first access node relating to the response received at the first device.

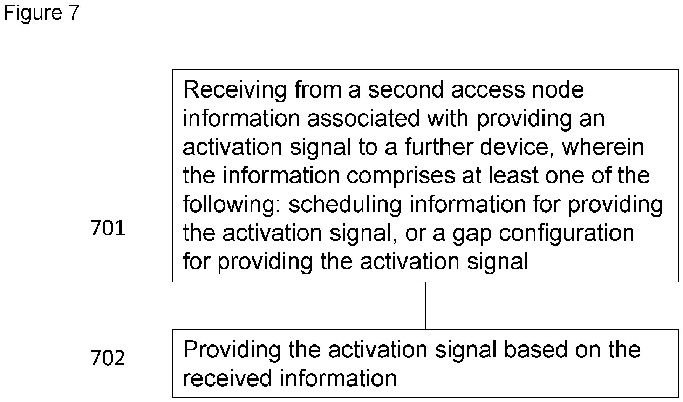

Figure 7 shows a flowchart of a method according to an example embodiment. The method may be performed at a second device. The second device may comprise an activator device. The second device may comprise a UE.

In 701, the method comprises receiving from a second access node information associated with providing an activation signal to a further device, wherein the information comprises at least one of the following: scheduling information for providing the activation signal, or a gap configuration for providing the activation signal.

In 702, the method comprises providing the activation signal based on the received information.

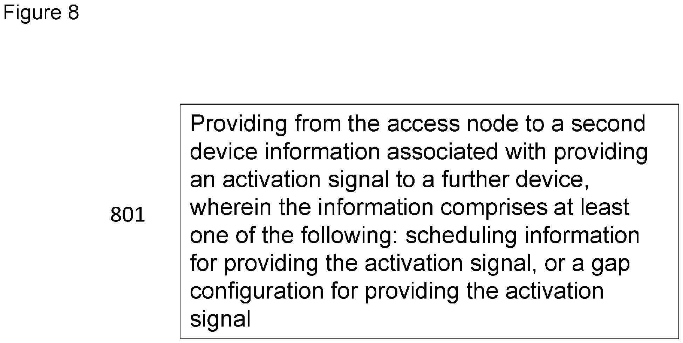

Figure 8 shows a flowchart of a method according to an example embodiment. The method may be performed at an access node. The access node may be the second access node, referred to in the method described with reference to Figure 6.

In 801, the method comprises providing from the access node to a second device information associated with providing an activation signal to a further device, wherein the information comprises at least one of the following: scheduling information for providing the activation signal, or a gap configuration for providing the activation signal.

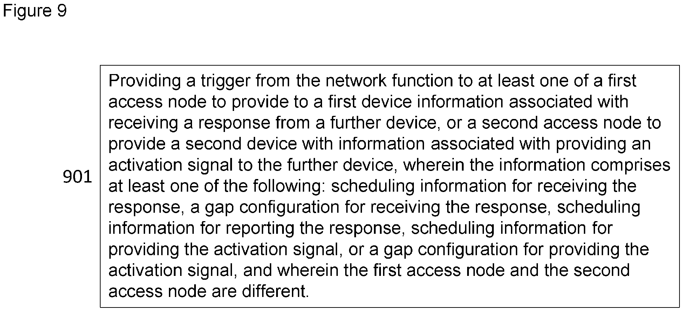

Figure 9 shows a flowchart of a method according to an example embodiment. The method may be performed at an apparatus comprising a network function. The network function may be a SCU.

In 901, the method comprises providing a trigger from the network function to at least one of: a first access node to provide to a first device information associated with receiving a response from a further device, or a second access node to provide a second device with information associated with providing an activation signal to the further device, wherein the information comprises at least one of the following: scheduling information for receiving the response, a gap configuration for receiving the response, scheduling information for reporting the response, scheduling information for providing the activation signal, or a gap configuration for providing the activation signal, and wherein the first access node and the second access node are different.

In the methods described with reference to Figures 5 to 9, the further device may be activated by a transmission from the second device, wherein the second device is associated with the second access node. A response from the further device may be received by the first device, wherein the first device is associated with the first access node and the first access node and the second access node are different.

In the methods described with reference to Figures 5 to 9, the first device may comprise a reader device. The first device may comprise a UE. The first access node may be a gNB (also referred to as a serving gNB). The second device may comprise an activator device. The second device may comprise a UE. The second access node may be a gNB (also referred to as a serving gNB). The further device may be an ambient Internet of Things, AIoT, device. The response may be an AIoT response.

If an activator device and/or reader device use the same operating frequency carrier for AIoT device communication as already assigned by the respective serving gNB then direct scheduling is feasible. Whenever the operating frequency carrier of either the activator device or reader device for AIoT communication is different from that assigned by the serving gNB then an AG or MG is in principle required.

To enable intercell coordination of an activation and reading session (i.e., when the activator device and reader device belong to different cells), the following set of solutions linked to specific deployment scenarios as listed in Table 1 are provided.

**Table 1**

| AIoT spectrum: | | NR In-band | | NR Guard band | Out of NR band |
|---|---|---|---|---|---|
| Solution #: | | Active carrier | Different carrier | Different carrier | Different carrier |
| 1 | Schedule Activator Schedule Reader | Activator Reader | | | |
| 2 + 4 | AG Activator Schedule Reader | Reader | Activator | Activator | Activator |
| 3 | Schedule Activator MG Reader | Activator | Reader | Reader | Reader |
| 5 | AG Activator MG Reader | | Activator Reader | Activator Reader | Activator Reader |

In solution 1, there is resource scheduling for both the activator device and reader device.

In an example embodiment, a SCU makes the request to serving gNBs of both the activator and reader UEs and in turn the gNBs trigger the resource allocation in their respective UEs. The reader UE's serving gNB then receives the report of the AIoT response and forwards it to the SCU.

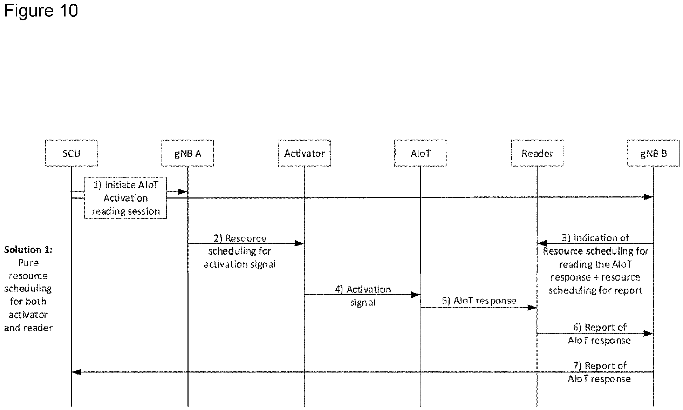

Figure 10 shows an example signalling diagram for a method according to solution 1.

In step 1, the SCU triggers the start of an AIoT activation/reading session, by contacting both gNB A and gNB B. This is an example of providing a trigger from the network function to a first access node to provide to a first device information associated with receiving a response from a further device and a second access node to provide a second device with information associated with providing an activation signal to the further device.

The assumption here is that the SCU is already aware of the specific activator device and reader device to trigger, as well as the associated serving gNBs.

In step 2, the gNB A, upon receiving the SCU trigger, sends an indication that the activator needs to send the activation signal to the AIoT device as well as sends the resource scheduling information to the activator, so that the activator can actually send its activation signal. This is an example of receiving a trigger from a network function (e.g., SCU) to provide the information to the second device and providing the information based on the trigger. In this example, the information comrpises scheduling information for providing the activation signal.

In step 3, the gNB B upon receiving the SCU trigger, sends the resource scheduling information to the reader, so that the reader can receive the reply from the AIoT device as well as to report the AIoT device response to the gNB B. This is an example of receiving a trigger from a network function (e.g., SCU) to provide the information to the first device and means for providing the information based on the trigger. In this example, the information comprises at least one of: scheduling information for receiving the response or scheduling information for reporting the response.

In step 4, the activator device sends the activation signal to the AIoT device.

In step 5, the AIoT device upon receiving the activation signal provides its reply (either by backscattering the activation signal or by performing an active transmission).

In step 6, the reader device receives the AIoT device response and reports it to the gNB B. This is an example of providing a report relating to the response from the first device to the first access node.

In step 7, the gNB B reports back to the SCU the AIoT device response. This is an example of receiving, based on the provided information, a report at the network function from the first device relating to a response received at the first device.

In solution 2, there is an AG Activation gap (AG) for the activator device and scheduling for the reader device.

In an example embodiment, the SCU makes a request to the serving gNBs of both the activator and reader UEs and in turn the gNBs trigger the configuration of (AG) and resource allocation in their respective UEs. The reader UE's serving gNB then receives the report of the AIoT response and forwards it to the SCU

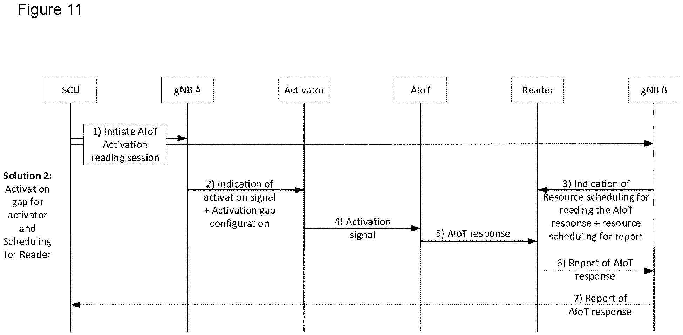

Figure 11 shows an example signalling diagram for a method according to solution 2.

In step 1, the SCU triggers the start of an AIoT activation/reading session, by contacting both gNB A and gNB B. This is an example of providing a trigger from the network function to a first access node to provide to a first device information associated with receiving a response from a further device and a second access node to provide a second device with information associated with providing an activation signal to the further device. The assumption here is that the SCU is already aware of the specific activator device and reader device to trigger as well as the associated serving gNBs.

In step 2, the gNB A upon receiving the SCU trigger, sends an indication that the activator device needs to send the activation signal to the AIoT device as well as the configuration of the activation gap, so that the activator can actually send its activation signal. This is an example of receiving a trigger from a network function (e.g., SCU) to provide the information to the second device and providing the information based on the trigger. In this example, the information comprises a gap configuration for providing the activation signal. The gap configuration may consist of a time duration as well as which carriers the gNB A will assume that the activator will not be reachable during the gap period.

In step 3, the gNB B, upon receiving the SCU trigger, sends the resource scheduling information to the reader, so that the reader can receive the reply from the AIoT device as well as to report the AIoT device response to the gNB B. This is an example of receiving a trigger from a network function (e.g., SCU) to provide the information to the first device and means for providing the information based on the trigger. In this example, the information comprises at least one of: scheduling information for receiving the response or scheduling information for reporting the response.

In step 4, the activator sends the activation signal to the AIoT device.

In step 5, the AIoT device upon receiving the activation signal provides its reply (either by backscattering the activation signal or by performing an active transmission).

In step 6, the reader receives the AIoT device response and reports it to the gNB B. This is an example of providing a report relating to the response from the first device to the first access node.

In step 7, the gNB B reports back to the SCU the AIoT device response. This is an example of receiving, based on the provided information, a report at the network function from the first device relating to a response received at the first device.

In solution 3, there is scheduling for the activator device and a MG for the reader device triggered via an interaction started by the activator device. The SCU makes a request to the serving gNB of the activator device and in turn the gNB triggers the resource allocation of the activator device.

The activator UE finds the appropriate reader device, which in turn triggers the reader device to request the configuration of a MG. The activator device may receive assistance information for finding the reader e.g., the neighbour gNB may indirectly (via the SCU) provide a list of candidate readers.

After the Activation and Reading session is concluded, the reader device sends the report of the AIoT response back to the activator, which in turn sends its back to the SCU via the serving gNB,

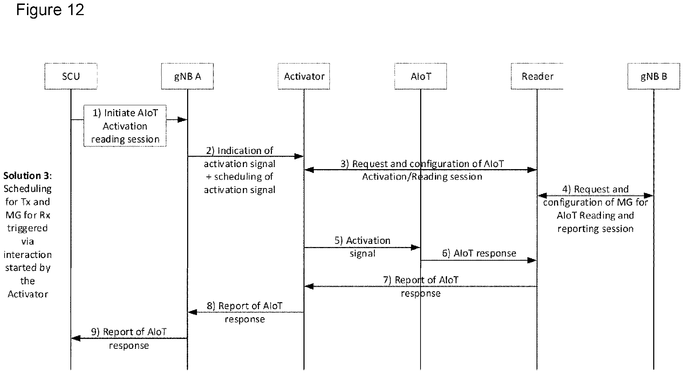

Figure 12 shows an example signalling diagram of a method according to solution 3.

In step 1, the SCU triggers the start of an activator led AIoT activation/reading session, by contacting gNB A. The assumption here is that the SCU is already aware of the specific activator device, but unaware of the reader device that should be part of the session. This is an example of providing a trigger from the network function to a second access node to provide a second device with information associated with providing an activation signal to the further device.

In step 2, gNB A upon receiving the SCU trigger, sends an indication that the activator device needs to send the activation signal to the AIoT device as well as sends the resource scheduling information to the activator device, so that the activator device can send its activation signal. This is an example of receiving a trigger from a network function (e.g., SCU) to provide the information to the second device and providing the information based on the trigger. In this example, the information comrpises scheduling information for providing the activation signal.

In step 3, the activator device finds, request and configures an activation/reading session with the reader device. This is an example of performing a discovery procedure at the second device for the first device. The finding can be based on sidelink discovery (e.g. using the Prose framework).

In step 4, upon being found by the activator device, the reader device requests to its serving gNB (i.e. gNB B) a configuration of a measurement gap where it can perform the AIoT response reading as well provide the reporting back to the activator. This is an example of providing a request to the first access node for the gap configuration for receiving the response. The gap configuration may comprise a time duration as well as which carriers the gNB A will assume that the activator device will not be reachable during the gap period.

In step 5, the activator sends the activation signal to the AIoT device.

In step 6, the AIoT device upon receiving the activation signal provides its reply (either by backscattering the activation signal or by performing an active transmission).

In step 7, the reader device receives the AIoT device response and reports it to the activator device. This is an example of providing a report relating to the response from the first device to the second device. This reporting may be performed via sidelink.

In step 8, the activator reports the AIoT response received from the reader, back to the serving gNB (i.e. gNB A).

In step 9, the gNB A reports the AIoT device response to the SCU. This is an example of receiving, based on the provided information, a report at the network function from the first device relating to a response received at the first device, wherein the report is received at the network function via the second access node.

In solution 4, there is scheduling for a reader device and an activation gap (AG) for an activator device triggered via interaction started by the reader device. The SCU makes the request to the serving gNB of the reader device and, in turn, the gNB triggers the resource allocation of the reader device.

The reader device finds the appropriate activator device (which may be in the same serving cell as the activator or in a different serving cell, the latter case being the focus of this disclosure), which in turn triggers the activator device to request the configuration of an AG. The reader UE may receive assistance information for finding the activator device e.g., the neighbour gNB may indirectly (via the SCU) provide a list of candidate activator devices.

After the activation and reading session is concluded, the reader device sends the report of the AIoT response to the SCU via the serving gNB.

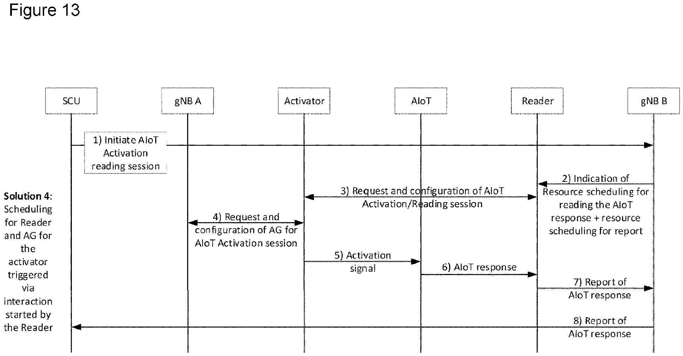

Figure 13 shows an example signalling diagram of a method according to solution 4.

In step 1, the SCU triggers the start of a reader led AIoT activation/reading session, by contacting gNB B. This is an example of providing a trigger from the network function to a first access node to provide to a first device information associated with receiving a response from a further device. The assumption here is that the SCU is already aware of the specific reader device, but unaware of the activator device that should be part of the session.

In step 2, the gNB B upon receiving the SCU trigger, sends the resource scheduling information to the reader, so that the reader can receive the reply from the AIoT device as well as to report the AIoT device response to the gNB B. This is an example receiving a trigger from a network function to provide the information to the first device and means for providing the information based on the trigger. In this example the information comprises at least one of: scheduling information for receiving the response or scheduling information for reporting the response

In step 3, the reader device finds, requests and configures an activation/reading session with the activator device. This is an example of performing a discovery procedure at the first device for the second device. The finding may be based on sidelink discovery (e.g. using the Prose framework).

In step 4, upon being found by the reader, the activator device requests to its serving gNB (i.e. gNB A) a configuration of a activation gap where it can perform the transmission of the activation signal towards the AIoT device. This is an example of providing a request to the second access node for a gap configuration for providing the activation signal.

In step 5, the activator device sends the activation signal to the AIoT device.

In step 6, the AIoT device, upon receiving the activation signal provides its reply (either by backscattering the activation signal or by performing an active transmission).

In step 7, the reader receives the AIoT device response and reports it to the gNB B. This is an example of providing a report relating to the response from the first device to the first access node.

In step 8, the gNB B reports the AIoT device response to the SCU. This is an example of receiving, based on the provided information, a report at the network function from the first device relating to a response received at the first device.

In solution 5, there is gap configuration for the activator device and the reader device. The activator device is provided with an Activation gap (AG) and the reader device with a measurement gap (MG). The session control unit (SCU) makes the request to serving gNBs of both the activator and reader devices and in turn the gNBs trigger the gap configuration in their respective UEs. The reader device's serving gNB then receives the report of the AIoT response and forwards it to the SCU.

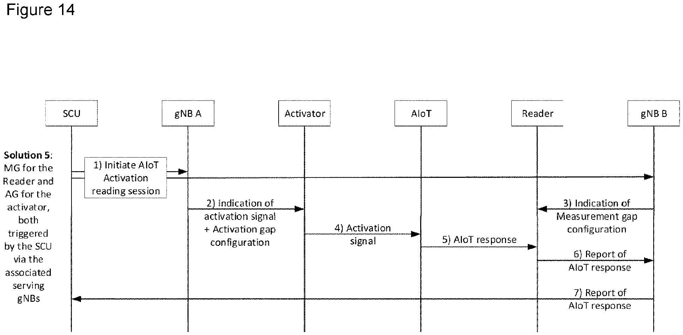

Figure 14 shows an example signalling diagram of a method according to solution 5.

In step 1, the SCU triggers the start of an AIoT activation/reading session, by contacting both gNB A and gNB B. This is an example of providing a trigger from the network function to a first access node to provide to a first device information associated with receiving a response from a further device and a second access node to provide a second device with information associated with providing an activation signal to the further device.

The assumption here is that the SCU is already aware of the specific activator device and reader device to trigger as well as the associated serving gNBs.

In step 2, the gNB A, upon receiving the SCU trigger, sends an indication that the activator needs to send the activation signal to the AIoT device as well as sends the activation gap information to the activator, so that the activator can send its activation signal. This is an example of receiving a trigger from a network function (e.g., SCU) to provide the information to the second device and providing the information based on the trigger. In this example, the information comprises a gap configuration for providing the activation signal. The activation gap configuration may comprise the time duration as well as which carriers the gNB A will assume that the activator will not be reachable during the gap period.

In step 3, the gNB B, upon receiving the SCU trigger, sends the measurement gap information to the reader, so that the reader can receive the reply from the AIoT device as well as to report the AIoT device response to the gNB B. This is an example of receiving a trigger from a network function (e.g., SCU) to provide the information to the first device and providing the information based on the trigger. In this example, the information comprises a gap configuration for receiving the response. The measurement gap configuration may comprise the time duration as well as which carriers the gNB A will assume that the activator will not be reachable during the gap period.

In step 4, the activator device sends the activation signal to the AIoT device.

In step 5, the AIoT device upon receiving the activation signal provides its reply (either by backscattering the activation signal or by performing an active transmission).

In step 6, the reader device receives the AIoT device response and reports it to the gNB B. This is an example of providing a report relating to the response from the first device to the first access node.

In step 7, the gNB B reports the AIoT device response to the SCU. This is an example of receiving, based on the provided information, a report at the network function from the first device relating to a response received at the first device.

In each of the solutions, the SCU may not necessarily reside in either of the serving gNBs. For example, SCU may be an additional functionality of the LMF. In this case, the SCU-gNG interaction may require definition of an IE(s) in NRPPa assistance information and NRPPa reports. The SCU - UE (activator device/reader device) interaction may require definition of an IE(s) in LPP assistance information and LPP reports.

The information may be received via radio resource control signalling, or downlink control information.

If both the activator device and reader device are UEs, then the session request and configuration may be realized via SL control channel.

The trigger may be received in a MAC CE. If either the activator or reader is a UE, the session request and configuration may be realized via a RRC IE or MAC CE. For example, RRC signalling may be used to configure the UE as an activator, which can be part of RRC Reconfiguration signalling. The resource allocation and triggering to send the activation signal may comprise a DCI or the resource allocation can be a DCI and then the triggering to send the activation signal may be in a DL MAC CE.

The physical properties of the response from the further device (e.g., ambient IoT device) may be a backscattered signal (in the case of Type A and B devices) or an active signal (in the case of Type C devices). The AIoT signal design may be a UL transmission (e.g. it will have a PUSCH component) or a SL transmissions (e.g. it will have both a PSCCH and PSSCH component) or a type of container may be introduced such as PBSCH (Physical Backscattered Shared Channel). The response may be carried by at least one of: physical uplink shared channel, PUSCH, physical sidelink control channel, PSCCH, physical sidelink shared channel, PSSCH, or physical backscattered shared channel, PBSCH.

The report can be either a MAC CE, RRC level report or higher level report (e.g. in a NAS container).

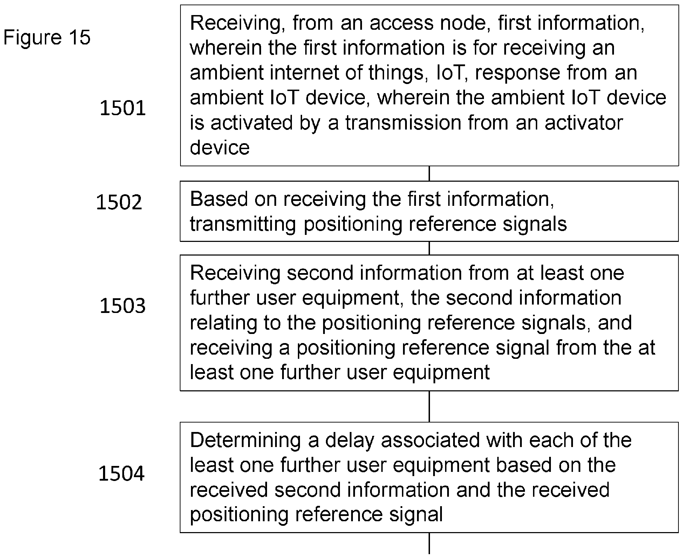

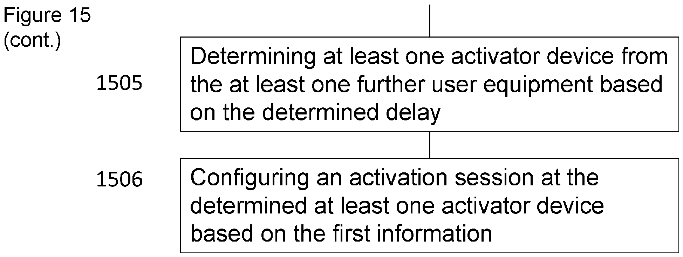

Figure 15 shows a flowchart of an example method which may be performed at a reader device. This method is an example of a first device (e.g., a reader device) performing a discovery procedure for a second device (e.g., an activator device).

In 1501, the method comprises receiving, from an access node, first information, wherein the first information is for receiving an ambient internet of things, IoT, response from an ambient IoT device, wherein the ambient IoT device is activated by a transmission from an activator device.

In 1502, the method comprises, based on receiving the first information, transmitting positioning reference signals.

In 1503, the method comprises receiving second information from at least one further user equipment, the second information relating to the positioning reference signals, and receiving a positioning reference signal from the at least one further user equipment.

In 1504, the method comprises determining a delay associated with each of the least one further user equipment based on the received second information and the received positioning reference signal.

In 1505, the method comprises determining at least one activator device from the at least one further user equipment based on the determined delay.

In 1506, the method comprises configuring an activation session at the determined at least one activator device based on the first information.

The positioning reference signals may comprise sidelink (SL) positioning reference signals (PRS).

The first information may comprise scheduling information. The second information may comprise RX-TX time difference computed at the further UE based on a PRS measurement of the provided PRS at the further UE.

An example embodiment of how a reader UE may select an activator UE is described below.

In an example embodiment, to select the activator, the reader UE may trigger a reduced SL positioning session i.e. may initiate a SL anchor discovery. Once the anchor discovery is complete, the reader UE may interrupt the SL positioning session and proceed with the activator selection.

For example, in a first step, the UE may transmit SL PRS for anchor selection. This is an example of transmitting positioning reference signals, where the positioning reference signals are SL PRS.

In a second step, all nearby UEs that receive SL PRS, measure said PRS and respond to the reader UE with a SL PRS and their RX-TX time difference computed using the PRS measurement. This is an example of receiving second information from at least one further user equipment, the second information relating to the positioning reference signals, and receiving a positioning reference signal from the at least one further user equipment.

In a third step, the reader UE computes its own RX-TX time difference and using the reports from step 2, it computes a delay to each of the nearby UEs which now become candidate activators i.e.:

    a. d1 to candidate activator UE1, ...
    b....
    c. di to candidate activator UEi, etc.

The third step is an example of determining a delay associated with each of the least one further user equipment based on the received second information and the received positioning reference signal.

Determining the activator device may comprise sorting the at least one further user equipment based on at least one delay threshold. Each of the at least one delay threshold may be associated with a type of ambient IoT device.

For example, in a fourth step, depending on the AIoT device type the reader has been configured to detect, the reader UE selects one or more activator UEs as follows:

    a. For device type A, the maximum activation range aA and respectively reading range rA, and thus the maximum activation/reading delays are daA = aA/c, drA = rA/c, where c = 3e8 m/s. Then, all UEs that fulfill the condition di <= daA+drA are down-selected for activator UEs and their IDs are collected in set SA = {ID1,..IDx}.
    b. For device type B, the maximum activation range aB and respectively reading range rB, and thus the maximum activation/reading delays are daB = aB/c, drB = rB/c, where c = 3e8 m/s. Then, all UEs that fulfill the condition di <= daB+drB are down-selected and their IDs are collected in the set SB.
    c. For device type C, the maximum activation range aC and respectively reading range rC, and thus the maximum activation/reading delays are daC = aC/c, drC = rC/c, where c = 3e8 m/s. Then, all UEs that fulfill the condition di <= daC+drC are down-selected and their IDs are collected in the set SC.
    d. Using the three sets, the reader UE selects multiple tiers of candidates:

        i. Tier 1: the activator UEs that are in all sets i.e.,

$$S1 = SA \cap SB \cap SC.$$

        ii. Tier 2: the activators that are in sets:

        $SA \cap SB,$
        $SA \cap SC,$
        $SC \cap SB.$

        iii. Tier 3: the activators that are in sets:

        SA
        SB
        SC

The activator device may be determined based on the type of ambient IoT device.

For example, in a fifth step, the reader UE selects activator UEs from tier 1, then tier 2, then from tier 3, according to the types of AIoT devices which are targeted for reading.

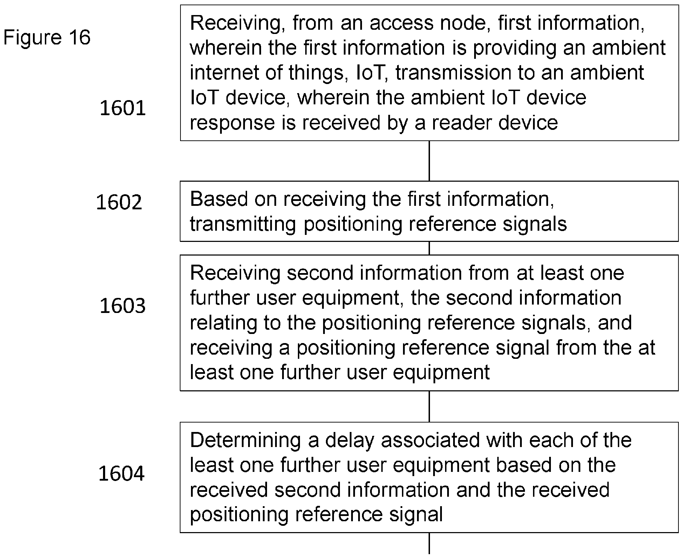

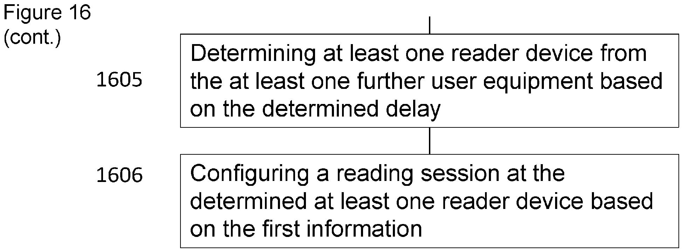

Figure 16 shows a flowchart of an example method which may be performed at an activator device. This method is an example of a second device (e.g., an activator device) performing a discovery procedure for a first device (e.g., a reader device).

In 1601, the method comprises receiving, from an access node, first information, wherein the first information is for providing an ambient internet of things, IoT, transmission to an ambient IoT device, wherein the ambient IoT device response is received by a reader device.

In 1602 the method comprises, based on receiving the first information, transmitting positioning reference signals.

In 1603, the method comprises receiving second information from at least one further user equipment, the second information relating to the positioning reference signals, and receiving a positioning reference signal from the at least one further user equipment.

In 1604, the method comprises determining a delay associated with each of the least one further user equipment based on the received second information and the received positioning reference signal.

In 1605, the method comprises determining at least one reader device from the at least one further user equipment based on the determined delay.

In 1606, the method comprises configuring a reading session at the determined at least one reader device based on the first information.

An example embodiment of how an activator UE may select a reader UE is described below.

In an example embodiment, to select a reader device, an activator UE may trigger a reduced SL positioning session, i.e. may initiate a SL anchor discovery. Once the anchor discovery is complete, the activator UE may interrupt the SL positioning session and proceed with the reader selection.

For example, in a first step, the activator UE may transmit SL PRS for anchor selection. This is an example of transmitting positioning reference signals, where the positioning reference signals are SL PRS.

In a second step, all nearby UEs that receive SL PRS, measure said PRS and respond to the activator UE with a SL PRS and their RX-TX time difference computed using the PRS measurement. This is an example of receiving second information from at least one further user equipment, the second information relating to the positioning reference signals, and receiving a positioning reference signal from the at least one further user equipment.

In a third step, the activator UE computes its own RX-TX time difference and using the reports from step 2, it computes a delay to each of the nearby UEs which now become candidate readers i.e.:

a. d1 to candidate reader UE1, ...
b....
c. di to candidate reader UEi, etc.

The third step is an example of determining a delay associated with each of the least one further user equipment based on the received second information and the received positioning reference signal.

Determining the activator device may comprise sorting the at least one further user equipment based on at least one delay threshold. Each of the at least one delay threshold may be associated with a type of ambient IoT device.

In a fourth step, depending on the AIoT device type the activator has been configured to detect, the activator UE selects one or more reader UEs as follows:

e. For device type A, the maximum activation range aA and respectively reading range rA, and thus the maximum activation/reading delays are daA = aA/c, drA = rA/c, where c = 3e8 m/s. Then, all UEs that fulfill the condition di <= daA+drA are down-selected for reader UEs and their IDs are collected in set SA = {ID1,..IDx}.
f. For device type B, the maximum activation range aB and respectively reading range rB, and thus the maximum activation/reading delays are daB = aB/c, drB = rB/c, where c = 3e8 m/s. Then, all UEs that fulfill the condition di <= daB+drB are down-selected and their IDs are collected in the set SB.
g. For device type C, the maximum activation range aC and respectively reading range rC, and thus the maximum activation/reading delays are daC = aC/c, drC = rC/c, where c = 3e8 m/s. Then, all UEs that fulfill the condition di <= daC+drC are down-selected and their IDs are collected in the set SC.
h. Using the three sets, the reader UE selects multiple tiers of candidates:

iv. Tier 1: the reader UEs that are in all sets i.e.,

$$S1 = SA \cap SB \cap SC.$$

v. Tier 2: the reader UEs that are in sets:

SA $\cap$ SB,
SA $\cap$ SC,
SC $\cap$ SB.

vi. Tier 3: the reader UEs that are in sets:

SA
SB
SC

The activator device may be determined based on the type of ambient IoT device.

For example, in a fifth step, the reader UE selects reader UEs from tier 1, then tier 2, then from tier 3, according to the types of AIoT devices which are targeted for reading.

An apparatus, such as a first device, may comprise means for receiving from a first access node, information associated with receiving a response from a further device, wherein the information comprises at least one of the following: scheduling information for receiving the response, a gap configuration for receiving the response, or scheduling information for reporting the response, means for receiving the response based on the received information; and means for, based on the received information and in response to receiving the response, providing a report relating to the response to the first access node or a second device.

An apparatus, such as an access node, may comprise means for providing from the access node to a first device, information associated with receiving a response at the first device from a further device, wherein the information comprises at least one of the following: scheduling information for receiving the response, a gap configuration for receiving the response, or scheduling information for reporting the response and means for receiving, based on the provided information, a report at the first access node relating to the response received at the first device.

An apparatus, such as a second device, may comprise means for receiving from a second access node information associated with providing an activation signal to a further device, wherein the information comprises at least one of the following: scheduling information for providing the activation signal, or a gap configuration for providing the activation signal and means for providing the activation signal based on the received information.

An apparatus, such as an access node, may comprise means for providing from the access node to a second device information associated with providing an activation signal to a further device, wherein the information comprises at least one of the following: scheduling information for providing the activation signal, or a gap configuration for providing the activation signal.

An apparatus comprising a network function may comprise means for providing a trigger from the network function to at least one of: a first access node to provide to a first device information associated with receiving a response from a further device, or a second access node to provide a second device with information associated with providing an activation signal to the further device, wherein the information comprises at least one of the following: scheduling information for receiving the response, a gap configuration for receiving the response, scheduling information for reporting the response, scheduling information for providing the activation signal, or a gap configuration for providing the activation signal, and wherein the first access node and the second access node are different.

A reader device may comprise means for receiving, from an access node, first information, wherein the first information is for receiving an ambient internet of things, IoT, response from an ambient IoT device, wherein the ambient IoT device is activated by a transmission from an activator device, means for, based on receiving the first information, transmitting positioning reference signals, means for receiving second information from at least one further user equipment, the second information relating to the positioning reference signals, and receiving a positioning reference signal from the at least one further user equipment, means for determining a delay associated with each of the least one further user equipment based on the received second information and the received positioning reference signal, means for determining at least one activator device from the at least one further user equipment based on the determined delay and means for configuring an activation session at the determined at least one activator device based on the first information.

An activator device may comprise means for means for receiving, from an access node, first information, wherein the first information is for providing an ambient internet of things, IoT, transmission to an ambient IoT device, wherein the ambient IoT device response is received by a reader device, means for, based on receiving the first information, transmitting positioning reference signals, means for receiving second information from at least one further user equipment, the second information relating to the positioning reference signals, and receiving a positioning reference signal from the at least one further user equipment, means for determining a delay associated with each of the at least one further user equipment based on the received second information and the received positioning reference signal, means for determining at least one reader device from the at least one further user equipment based on the determined delay and means for configuring a reading session at the determined at least one reader device based on the first information.

The means may comprise at least one processor, and at least one memory storing instructions which, are executed by the processor.

An apparatus may comprise a user equipment, such as a mobile phone, or an access node such as a gNB, or a NF such as a SCU, be the user equipment, gNB or NF or be comprised in the user equipment, gNB or NF or a chipset for performing at least some actions of/for the user equipment, gNB or NF.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems such as 6G networks or 5G-Advanced networks. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

I hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

**Claims**

1. A reader device comprising:

   means for receiving, from an access node, first information, wherein the first information is for receiving an ambient internet of things, IoT, response from an ambient IoT device, wherein the ambient IoT device is activated by a transmission from an activator device;
   means for, based on receiving the first information, transmitting positioning reference signals;
   means for receiving second information from at least one further user equipment, the second information relating to the positioning reference signals, and receiving a positioning reference signal from the at least one further user equipment;
   means for determining a delay associated with each of the least one further user equipment based on the received second information and the received positioning reference signal;
   means for determining at least one activator device from the at least one further user equipment based on the determined delay; and
   means for configuring an activation session at the determined at least one activator device based on the first information.

2. The reader device according to claim 1, wherein means for determining the activator device comprises means for sorting the at least one further user equipment based on at least one delay threshold.

3. The reader device according to claim 2, wherein each of the at least one delay threshold is associated with a type of ambient IoT device.

4. The reader device according to claim 3, comprising means for determining the activator device based on the type of the ambient IoT device.

5. The reader device according to any of claims 1 to 4, wherein the first information comprises scheduling information.

6. The reader device according to any of claims 1 to 5, wherein the positioning reference signals comprise sidelink positioning reference signals.

7. An activator device comprising:

   means for receiving, from an access node, first information, wherein the first information is for providing an ambient internet of things, IoT, transmission to an ambient IoT device, wherein the ambient IoT device response is received by a reader device;
   means for, based on receiving the first information, transmitting positioning reference signals;
   means for receiving second information from at least one further user equipment, the second information relating to the positioning reference signals, and receiving a positioning reference signal from the at least one further user equipment;
   means for determining a delay associated with each of the least one further user equipment based on the received second information and the received positioning reference signal;
means for determining at least one reader device from the at least one further user equipment based on the determined delay; and
means for configuring a reading session at the determined at least one reader device based on the first information.

8. A *method comprising:*

receiving, from an access node, first information, wherein the first information is for receiving an ambient internet of things, IoT, response from an ambient IoT device, wherein the ambient IoT device is activated by a transmission from an activator device;
based on receiving the first information, transmitting positioning reference signals; receiving second information from at least one further user equipment, the second information relating to the positioning reference signals, and receiving a positioning reference signal from the at least one further user equipment;
determining a delay associated with each of the least one further user equipment based on the received second information and the received positioning reference signal;
determining at least one activator device from the at least one further user equipment based on the determined delay; and
configuring an activation session at the determined at least one activator device based on the first information.

9. A method comprising:

receiving, from an access node, first information, wherein the first information is for providing an ambient internet of things, IoT, transmission to an ambient IoT device, wherein the ambient IoT device response is received by a reader device;
based on receiving the first information, transmitting positioning reference signals; receiving second information from at least one further user equipment, the second information relating to the positioning reference signals, and receiving a positioning reference signal from the at least one further user equipment;
determining a delay associated with each of the least one further user equipment based on the received second information and the received positioning reference signal;
determining at least one reader device from the at least one further user equipment based on the determined delay; and
configuring a reading session at the determined at least one reader device based on the first information.

10. *A reader device comprising* at least one processor, and at least one memory storing instructions which, when executed by the processor, cause the reader device at least to:

receive, from an access node, first information, wherein the first information is for receiving an ambient internet of things, IoT, response from an ambient IoT device, wherein the ambient IoT device is activated by a transmission from an activator device;
based on receiving the first information, transmit positioning reference signals;
receiving second information from at least one further user equipment, the second information relating to the positioning reference signals, and receiving a positioning reference signal from the at least one further user equipment;
determine a delay associated with each of the least one further user equipment based on the received second information and the received positioning reference signal;
determine at least one activator device from the at least one further user equipment based on the determined delay; and
configure an activation session at the determined at least one activator device based on the first information.

11. An activator device comprising at least one processor, and at least one memory storing instructions which, when executed by the processor, cause the activator device at least to:

receive, from an access node, first information, wherein the first information is for providing an ambient internet of things, IoT, transmission to an ambient IoT device, wherein the ambient IoT device response is received by a reader device;
based on receiving the first information, transmitting positioning reference signals; receiving second information from at least one further user equipment, the second information relating to the positioning reference signals, and receiving a positioning reference signal from the at least one further user equipment;

determine a delay associated with each of the least one further user equipment based on the received second information and the received positioning reference signal;

determine at least one reader device from the at least one further user equipment based on the determined delay; and

configure a reading session at the determined at least one reader device based on the first information.

12. A computer readable medium comprising instructions which, when executed by a reader device, cause the reader device to perform at least the following:

receiving, from an access node, first information, wherein the first information is for receiving an ambient internet of things, IoT, response from an ambient IoT device, wherein the ambient IoT device is activated by a transmission from an activator device;

based on receiving the first information, transmitting positioning reference signals; receiving second information from at least one further user equipment, the second information relating to the positioning reference signals, and receiving a positioning reference signal from the at least one further user equipment;

determining a delay associated with each of the least one further user equipment based on the received second information and the received positioning reference signal;

determining at least one activator device from the at least one further user equipment based on the determined delay; and

configuring an activation session at the determined at least one activator device based on the first information.

13. A computer readable medium comprising instructions which, when executed by an activator device, cause the activator device to perform at least the following:

receiving, from an access node, first information, wherein the first information is for providing an ambient internet of things, IoT, transmission to an ambient IoT device, wherein the ambient IoT device response is received by a reader device;

based on receiving the first information, transmitting positioning reference signals; receiving second information from at least one further user equipment, the second information relating to the positioning reference signals, and receiving a positioning reference signal from the at least one further user equipment;

determining a delay associated with each of the least one further user equipment based on the received second information and the received positioning reference signal;

determining at least one reader device from the at least one further user equipment based on the determined delay; and

configuring a reading session at the determined at least one reader device based on the first information.

Figure 1

Figure 2

200

208

205

203

201

204

202

207  206

Figure 3

300

304

303

302

301

Figure 4

Figure 5

501

Receiving from a first access node, information associated with receiving a response from a further device, wherein the information comprises at least one of the following: scheduling information for receiving the response, a gap configuration for receiving the response, or scheduling information for reporting the response

502

Receiving the response based on the received information

503

Based on the received information and in response to receiving the response, providing a report relating to the response to the first access node or a second device

Figure 6

| | Providing from the access node to a first device, information associated with receiving a response at the first device from a further device, wherein the information comprises at least one of the following: scheduling information for receiving the response, a gap configuration for receiving the response, or scheduling information for reporting the response |
|---|---|
| 601 | |

| 602 | Receiving, based on the provided information, a report at the first access node relating to the response received at the first device |

Figure 7

701

Receiving from a second access node information associated with providing an activation signal to a further device, wherein the information comprises at least one of the following: scheduling information for providing the activation signal, or a gap configuration for providing the activation signal

702

Providing the activation signal based on the received information

Figure 8

801

Providing from the access node to a second device information associated with providing an activation signal to a further device, wherein the information comprises at least one of the following: scheduling information for providing the activation signal, or a gap configuration for providing the activation signal

Figure 9

901 | Providing a trigger from the network function to at least one of a first access node to provide to a first device information associated with receiving a response from a further device, or a second access node to provide a second device with information associated with providing an activation signal to the further device, wherein the information comprises at least one of the following: scheduling information for receiving the response, a gap configuration for receiving the response, scheduling information for reporting the response, scheduling information for providing the activation signal, or a gap configuration for providing the activation signal, and wherein the first access node and the second access node are different.

Figure 10

Figure 11

Figure 12

Figure 13

**Solution 4:**
Scheduling
for Reader
and AG for
the
activator
triggered
via
interaction
started by
the Reader

| SCU | gNB A | Activator | AIoT | Reader | gNB B |
|---|---|---|---|---|---|

1) Initiate AIoT Activation reading session

2) Indication of Resource scheduling for reading the AIoT response + resource scheduling for report

3) Request and configuration of AIoT Activation/Reading session

4) Request and configuration of AG for AIoT Activation session

5) Activation signal

6) AIoT response

7) Report of AIoT response

8) Report of AIoT response

Figure 14

Figure 15

1501
| Receiving, from an access node, first information, wherein the first information is for receiving an ambient internet of things, IoT, response from an ambient IoT device, wherein the ambient IoT device is activated by a transmission from an activator device |

1502
| Based on receiving the first information, transmitting positioning reference signals |

1503
| Receiving second information from at least one further user equipment, the second information relating to the positioning reference signals, and receiving a positioning reference signal from the at least one further user equipment |

1504
| Determining a delay associated with each of the least one further user equipment based on the received second information and the received positioning reference signal |

Figure 15
(cont.)

1505

Determining at least one activator device from the at least one further user equipment based on the determined delay

1506

Configuring an activation session at the determined at least one activator device based on the first information

Figure 16

1601

Receiving, from an access node, first information, wherein the first information is providing an ambient internet of things, IoT, transmission to an ambient IoT device, wherein the ambient IoT device response is received by a reader device

1602

Based on receiving the first information, transmitting positioning reference signals

1603

Receiving second information from at least one further user equipment, the second information relating to the positioning reference signals, and receiving a positioning reference signal from the at least one further user equipment

1604

Determining a delay associated with each of the least one further user equipment based on the received second information and the received positioning reference signal

Figure 16
(cont.)

1605
Determining at least one reader device from the at least one further user equipment based on the determined delay

1606
Configuring a reading session at the determined at least one reader device based on the first information

Europäisches
Patentamt

European
Patent Office

Office européen
des brevets

## EUROPEAN SEARCH REPORT

**Application Number**

EP 24 21 7823

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NOKIA ET AL: "Ambient IoT and required RAN functionalities", 3GPP DRAFT; RP-231619, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Bangalore, India; 20230911 - 20230915 1 September 2023 (2023-09-01), XP052514797, Retrieved from the Internet: URL:https://ftp.3gpp.org/tsg_ran/TSG_RAN/T SGR_101/Docs/RP-231619.zip RP-231619 Ambient IoT and required RAN functionalities.docx [retrieved on 2023-09-01] * pages 2-4 * ----- | 1-13 | INV. H04W64/00 H04W4/70 H04W76/14 |
| A | NOKIA ET AL: "Ambient IoT deployment feasibilities", 3GPP DRAFT; RP-230861, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Taipei; 20230612 - 20230614 3 June 2023 (2023-06-03), XP052502996, Retrieved from the Internet: URL:https://ftp.3gpp.org/tsg_ran/TSG_RAN/T SGR_100/Docs/RP-230861.zip RP-230861 Ambient IoT deployment feasibilities.docx [retrieved on 2023-06-03] * pages 4,5 * ----- | 1-13 | **TECHNICAL FIELDS SEARCHED (IPC)** H04W |

-/--

The present search report has been drawn up for all claims

| Place of search | Date of completion of the search | Examiner |
|---|---|---|
| Berlin | 27 March 2025 | Espuela, Vicente |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 21 7823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3rd Generation Partnership Project; Technical Specification Group Services and System Aspects; Study on Ambient power-enabled Internet of Things (Release 19)", 3GPP STANDARD; TECHNICAL REPORT; 3GPP TR 22.840, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. V2.0.0 5 September 2023 (2023-09-05), pages 1-119, XP052511993, Retrieved from the Internet: URL:https://ftp.3gpp.org/Specs/archive/22_series/22.840/22840-200.zip 22840-200.docx [retrieved on 2023-09-05] * pages 47-49 * ----- | 1-13 | |
| A | NOKIA ET AL: "Ambient IoT positioning", 3GPP DRAFT; RP-230862, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Taipei; 20230612 - 20230614 11 June 2023 (2023-06-11), XP052508819, Retrieved from the Internet: URL:https://ftp.3gpp.org/Meetings_3GPP_SYNC/RAN/Docs/RP-230862.zip RP-230862 Ambient IoT positioning.docx [retrieved on 2023-06-11] * pages 1-4 * ----- | 1-13 | **TECHNICAL FIELDS SEARCHED (IPC)** |

The present search report has been drawn up for all claims

| Place of search | Date of completion of the search | Examiner |
|---|---|---|
| Berlin | 27 March 2025 | Espuela, Vicente |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................

& : member of the same patent family, corresponding
document

EPO FORM 1503 03.82 (P04C01)